# EUROPÄISCHE PATENTSCHRIFT

(11) **EP 0 683 718 B1**
(45) Veröffentlichungstag und Bekanntmachung des Hinweises auf die Patenterteilung: **19.08.1998**
(21) Anmeldenummer: 95900098.5
(22) Anmeldetag: 31.10.1994
(51) Int. Cl.: B29C 44/12

(54) **VERFAHREN ZUM HERSTELLEN VON KUNSTSTOFFORMTEILEN MIT KASCHIERUNG AUS DEKORMATERIAL**
METHOD OF PRODUCING PLASTIC MOULDINGS WITH A DECORATIVE SURFACE LAYER
PROCEDE DE FABRICATION DE PIECES EN PLASTIQUE MOULEES POURVUES D'UNE COUCHE SUPERFICIELLE DE MATERIAU DECORATIF

(30) Priorität: 15.12.1993 DE 4342729
(43) Veröffentlichungstag der Anmeldung: 29.11.1995
(73) Patentinhaber: Möller Werke GmbH, D-33649 Bielefeld (DE)
(72) Erfinder: BECKMANN, Friedhelm, D-32120 Hiddenhausen (DE)
(74) Vertreter: Thielking, Bodo, Dipl.-Ing.
(86) Internationale Anmeldenummer: EP9403572
(87) Internationale Veröffentlichungsnummer: WO9516552

(56) Entgegenhaltungen:
- EP-A- 0 363 594
- WO-A-93/17854
- FR-A- 2 643 308
- US-A- 4 546 899
- DATABASE WPI Section Ch, Week 8220, Derwent Publications Ltd., London, GB; Class A32, AN 82-40343E & JP,A,57 059 730 (DAINIPPON PRINTING KK) 10. April 1982

## Beschreibung

### TECHNISCHES GEBIET

Die Erfindung betrifft ein Verfahren zum Herstellen von Kunststofformteilen, die eine Kaschierung mit Dekormaterial aufweisen, sowie eine Schaumstoffschicht zwischen Dekormaterial und Kunststofformteil, bei dem die Schaumstoffschicht im zunächst unverschäumten Zustand zwischen Dekormaterial und Kunststofformteil angeordnet und durch Wärmeeinwirkung aufgeschäumt wird.

### STAND DER TECHNIK

In der Kraftfahrzeugindustrie zur Innenausstattung verwendete Kunststofformteile weisen häufig eine Kaschierung mit Dekormaterial auf. Als Dekormaterial kommen dabei z. B. Stoff, Teppich, Kunstleder, Leder etc. in Frage.

Das Kaschiermaterial wird in vielen Fällen nachträglich auf das fertige Kunststoffteil aufkaschiert. Ein solches Verfahren ist aufwendig und auch nicht in allen Fällen technisch und ästhetisch befriedigend.

Es wurde deshalb auch bereits bekannt, mit der sogenannten Hinterspritztechnik zu arbeiten. Diese Hinterspritztechnik sieht das Herstellen der Kunststoffteile mit entsprechenden Dekormaterialien in einem einzigen Arbeitsgang vor. Die bekannte Hinterspritztechnik erfordert im Regelfall jedoch Dekormaterialien, die auf die beim Spritzgießverfahren auftretenden hohen Drücke und Temperaturen abgestimmt sind. Auch wenn sich die Drücke durch Einsatz aufwendiger Heißkanalsysteme deutlich reduzieren lassen, müssen bei der Hinterspritztechnik zum Beispiel textile Dekorstoffe durch eine zusätzliche Kaschierung aus Vlies oder Schaum auf der Rückseite für dieses Verfahren ausgerüstet werden. Diese als Schutzschichten dienenden Rückseitenkaschierungen werden in der Regel durch eine Klebstoffverbindung oder durch Flammkaschierung aufgebracht. Die Verwendung von als Schutzschichten dienenden Vlies- oder Schaumkaschierungen hat den Nachteil, daß die Fertigteiloberfläche nicht in allen Fällen den gestellten Anforderungen genügt. Es lassen sich bei den bekannten Verfahren störende Oberflächenfehler nicht ausschließen, wie sie beispielsweise durch den sogenannten "Bügeleffekt" entstehen, der sich insbesondere an kompliziert geformten Oberflächenbereichen ergibt.

Es ist ferner ein Verfahren zum Herstellen eines gepolsterten Polypropylen-Ausstattungsteils, insbesondere für Fahrzeuge bekannt (DE 40 24 274 A1), das dem Oberbegriff des Patentanspruchs 1 entspricht. Bei diesem Verfahren weist das Ausstattungsteil drei unterschiedliche Schichten auf, nämlich eine Trägerschicht, eine Polsterschicht und eine folienartige Oberflächenschicht. Die Trägerschicht wird durch ein in einem vorherigen Spritzgußvorgang hergestelltes Polypropylen-Spritzgußteil gebildet. Es werden die Trägerschicht bzw. das Trägerteil und die folienartige Oberflächenschicht an die Wände zu einander komplementären Formhälften angelegt. In den zwischen Oberflächenschicht und Trägerteil verbleibenden Freiraum wird unverschäumtes Polypropylenmaterial eingebracht und anschließend erfolgt die Aufschäumung des zunächst unverschäumten, aufschäumbaren Materials zur Bildung der Polsterschicht in der geschlossenen Form.

### DIE ERFINDUNG

Ausgehend von dem vorstehend erläuterten Stand der Technik liegt der Erfindung die Aufgabe zugrunde, ein Verfahren der als bekannt vorausgesetzten Art so auszubilden, daß es einfach und preisgünstig durchführbar ist und zu einer Oberflächengestaltung mit hoher Güte und weitgehend beliebiger Form führt.

Die Lösung dieser Aufgabe erfolgt bei einem Verfahren der als bekannt vorausgesetzten Art dadurch, daß auf das Dekormaterial eine zunächst unverschäumte Rückseitenschicht aufgetragen wird, danach die unverschäumte Rückseitenschicht mit dem Kunststofformteil verbunden und die Rückseitenschicht im mit dem Kunststofformteil verbundenen Zustand aufgeschäumt wird.

Bei einer bevorzugten Ausgestaltung der Erfindung erfolgt die Aufschäumung innerhalb einer Form, an deren Wand die Außenseite des Dekormaterials im aufgeschäumten Zustand der Rückseitenschicht anliegt.

Das zu kaschierende Kunststofformteil ist bei einer bevorzugten Ausführungsform ein Kunststoffspritzgußteil Weiterhin bevorzugt kann das Kunststofformteil auch ein Blasformteil oder ein tiefgezogenes Kunststofformteil sein.

Bei dem erfindungsgemäßen Verfahren ist die gleichzeitig als Schutzschicht dienende, unverschäumte Rückseitenschicht des Dekormaterials vergleichsweise dünn. Hierdurch wird es für das Dekormaterial möglich, dem Oberflächenverlauf des Kunststofformteils gut zu folgen. Eine besonders hohe Oberflächenqualität ergibt sich, wenn die sichtbare Oberflächenseite des Kaschiermaterials in ihrer Ausdehnung durch das unter Wärmeeinwirkung erfolgende Aufschäumen durch eine Formwand begrenzt wird. Es wird dann die Oberflächenkontur des Dekormaterials von dem aufschäumenden Material gegen die gegenüberliegende Wand der Form gedrückt mit der Folge einer hohen Oberflächengenauigkeit.

Es hat sich als besonders zweckmäßig erwiesen, daß die für ein Aufschäumen der Rückseitenschicht erforderliche Wärme durch den Wärmeinhalt des Kunststofformteils aufgebracht wird.

Es ist aber auch möglich, daß die Aufschäumung der zunächst unverschäumten Rückseitenschicht nach Ausbildung des Kunststofformteils durch zusätzliche Wärmezufuhr erfolgt.

Besonders bevorzugt ist eine Lösung, bei der die Kavität des Werkzeugs zur Bildung der Schaumbereiche nach dem Formvorgang des Kunststofformteils vergrößert wird. Bei einem derartigen Verfahren wird das Dekormaterial mit der unverschäumten Rückseite in die Kavität beispielsweise einer Spritzgußform eingelegt. In einem ersten Schritt wird der Kunststoffspritzgußkörper gebildet, der sich bereits während des Spritzvorgangs innig mit der unverschäumten Rückseitenkaschierung des Dekormaterials verbindet. In diesem ersten Verfahrensschritt hat sich noch nicht die angestrebte elastische Schaumschicht gebildet. Die Bildung und Begrenzung der Schaumschicht erfolgt erst in einem zweiten Verfahrensschritt. Hierzu kann beispielsweise die zunächst in einer ersten Position verwendete Spritzgußform so verändert werden, daß sich die Wand der Kavität, an der die Sichtseite des Dekormaterials anliegt, um einen gewünschten Betrag von der gegenüberliegenen Formwand entfernt. Der Betrag der Formwandverlagerung entspricht dabei der gewünschten Dicke der zu bildenden Schaumschicht. Dieses beschriebene Verfahren kann auch in zwei unterschiedlichen Formen vorgenommen werden.

Das erfindungsgemäße Verfahren erlaubt auch eine Vergrösserung der Kavität lediglich in Teilbereichen der Form und auch an unterschiedlichen Stellen. Dies hat zur Folge, daß am gleichen kaschierten Kunststofformteil Bereiche unterschiedlicher Härte dadurch gebildet werden, daß sich die aufzuschäumende Rückseitenschicht im Aufschäumungsvorgang unterschiedlich dick ausbildet.

### KURZBESCHREIBUNG DER ZEICHNUNGSABBILDUNG

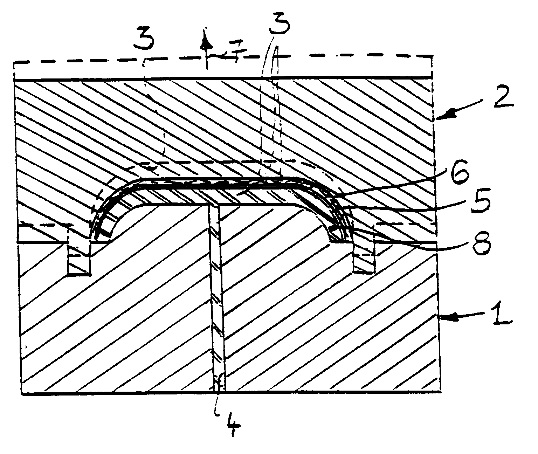

Die Zeichnung zeigt eine rein schematische Darstellung eines Schnitts durch eine Spritzgußform.

### BESTER WEG ZUR AUSFÜHRUNG DER ERFINDUNG

Mit 1 ist die erste Formhälfte bezeichnet, mit 2 die zweite Formhälfte. Die Kavität ist insgesamt mit 3 bezeichnet. Über den Angußkanal 4 gelangt das Kunststoffspritzgußmaterial 8 in die Kavität auf die Rückseite der zunächst unverschäumten Rückseitenschicht 5 des Dekormaterials 6, das mit seiner Sichtseite an der Innenwand der Formhälfte 2 anliegt. Nach dem Spritzgußvorgang ist die gesamte Kavität 3 ausgefüllt. Anschließend wird die Formhälfte 2 in Richtung des Pfeils 7 um die Dicke der zu bildenden aufgeschäumten Schaumstoffschicht verschoben. In der verschobenen Lage nimmt die Innenwand der Kavität in der Formhälfte 2 die gestrichelt dargestellte Position ein. Es kann sich jetzt die zunächst unverschäumte Rückseitenschicht, die durch Wärmeeinwirkung aktiviert wird, so ausbilden, daß das Kunststofformteil seine endgültige Oberflächenform erhält.

## Patentansprüche

1. Verfahren zum Herstellen von Kunststofformteilen, die eine Kaschierung mit Dekormaterial aufweisen, sowie eine Schaumstoffschicht zwischen Dekormaterial und Kunststofformteil, bei dem die Schaumstoffschicht im zunächst unverschäumten Zustand zwischen Dekormaterial und Kunststofformteil angeordnet und durch Wärmeeinwirkung aufgeschäumt wird,
dadurch gekennzeichnet,
daß auf das Dekormaterial eine zunächst unverschäumte Rückseitenschicht aufgetragen wird, danach die unverschäumte Rückseitenschicht mit dem Kunststofformteil verbunden und die Rückseitenschicht im mit dem Kunststofformteil verbundenen Zustand aufgeschäumt wird.

2. Verfahren nach Anspruch 1,
dadurch gekennzeichnet,
daß die Aufschäumung innerhalb einer Form erfolgt, an deren Wand die Außenseite des Dekormaterials im aufgeschäumten Zustand der Rückseitenschicht anliegt.

3. Verfahren nach Ansprüchen 1 und 2,
dadurch gekennzeichnet,
daß das Kunststofformteil ein Kunststoffspritzgußteil ist.

4. Verfahren nach Ansprüchen 1 und 2,
dadurch gekennzeichnet,
daß das Kunststofformteil ein Blasformteil ist.

5. Verfahren nach Ansprüchen 1 und 2,
dadurch gekennzeichnet,
daß das Kunststofformteil ein tiefgezogenes Kunststoffformteil ist.

6. Verfahren nach einem oder mehreren der Ansprüche 1 bis 5,
dadurch gekennzeichnet,
daß das Kunststofformteil ein Preßteil ist.

7. Verfahren nach einem oder mehreren der Ansprüche 1 bis 6,
dadurch gekennzeichnet,
daß das Kunststofformteil innerhalb der Form geformt wird.

8. Verfahren nach einem oder mehreren der Ansprüche 1 bis 7,
dadurch gekennzeichnet,
daß die für ein Aufschäumen der Rückseitenschicht erforderliche Wärme durch den Wärmeinhalt des Kunststoffformteils aufgebracht wird.

9. Verfahren nach einem oder mehreren der Ansprüche 1 bis 7,
dadurch gekennzeichnet,
daß die Aufschäumung der zunächst unverschäumten Rückseitenschicht nach Ausbildung des Kunststofformteils durch zusätzliche Wärmezufuhr erfolgt.

10. Verfahren nach einem oder mehreren der Ansprüche 1 bis 9,
dadurch gekennzeichnet,
daß die Kavität des Werkzeugs zur Bildung der Schaumbereiche nach dem Formvorgang des Kunststofformteils vergrößert wird.

11. Verfahren nach Anspruch 10,
dadurch gekennzeichnet,
daß die Vergrößerung der Kavität lediglich in Teilbereichen der Form erfolgt.

12. Verfahren nach Anspruch 10 oder 11,
dadurch gekennzeichnet,
daß die Kavität in der Spritzgußform unterschiedlich vergrößert wird.

13. Verfahren nach einem oder mehreren der Ansprüche 1 bis 12,
dadurch gekennzeichnet,
daß das Aufschäumen der Rückseitenschicht in einer separaten Form erfolgt.

14. Verfahren nach einem oder mehreren der Ansprüche 1 bis 13,
dadurch gekennzeichnet,
daß die Rückseitenschicht bei einer Temperatur von mehr als 100° C aufschäumt.

15. Verfahren nach einem oder mehreren der Ansprüche 1 bis 14,
dadurch gekennzeichnet,
daß die zunächst unverschäumte Rückseitenschicht vor dem Aufschäumvorgang vorgewärmt wird.

16. Verfahren nach Anspruch 15,
dadurch gekennzeichnet,
daß die Vorwärmung außerhalb der Werkzeugkavität erfolgt.

17. Verfahren nach Anspruch 15,
dadurch gekennzeichnet,
daß die Vorwärmung innerhalb der Werkzeugkavität erfolgt.

## Claims

1. Method for manufacturing moulded plastics parts which have a lining with decor material as well as a foam layer between the decor material and moulded plastics part wherein the foam layer is arranged in the initially unfoamed state between the decor material and moulded plastics part and is foamed up through the action of heat, characterised in that an initially unfoamed reverse side layer is applied to the decor material and then the unfoamed reverse side layer is bonded to the moulded plastics part and the reverse side layer is foamed up in the state bonded with the moulded plastics part.

2. Method according to claim 1 characterised in that foaming up is carried out inside a mould against whose outer wall the outside of the decor material adjoins in the foamed up state of the reverse side layer.

3. Method according to claims 1 and 2 characterised in that the moulded plastics part is an injection moulded plastics part.

4. Method according to claims 1 and 2 characterised in that the moulded plastics part is a blow moulded part.

5. Method according to claims 1 and 2 characterised in that the moulded plastics part is a deep-drawn moulded plastics part.

6. Method according to one or more of claims 1 to 5 characterised in that the moulded plastics part is a pressed part.

7. Method according to one or more of claims 1 to 6 characterised in that the moulded plastics part is moulded inside the mould.

8. Method according to one or more of claims 1 to 7 characterised in that the heat required to foam up the reverse side layer is applied by the heat content of the moulded plastics part.

9. Method according to one or more of claims 1 to 7 characterised in that foaming up of the initially unfoamed reverse side layer is carried out after the formation of the moulded plastics part through an additional heat supply.

10. Method according to one or more claims 1 to 9 characterised in that the cavity of the tool is enlarged in order to form the foam areas after the moulding process of the moulded plastic part.

11. Method according to claim 10 characterised in that the enlargement of the cavity is only carried out in partial areas of the mould.

12. Method according to claim 10 to 11 characterised in that the cavity in the injection casting mould is enlarged differently.

13. Method according to one or more claims 1 to 12 characterised in that foaming up of the reverse side layer is carried out in a separate mould.

14. Method according to one or more of claims 1 to 13 characterised in that the reverse side layer foams up at a temperature of more than 100 degs. C.

15. Method according to one or more of claims 1 to 14 characterised in that the initially unfoamed reverse side layer is preheated before the foaming process.

16. Method according to claim 15 characterised in that preheating is carried out outside of the tool cavity.

17. Method according to claim 15 characterised in that preheating is carried out inside the tool cavity.

## Revendications

1. Procédé de fabrication de pièces en matières plastique moulées pourvues d'une couche superficielle en matériau décoratif, ainsi qu'une couche de mousse placée entre le matériau décoratif et la pièce en matière plastique moulée, la couche de mousse étant tout d'abord appliquée à l'état non moussé entre le matériau décoratif et la pièce en matière plastique moulée, puis thermo-moussée,
caractérisé en ce que
le dos du matériau décoratif est d'abord pourvu d'une couche non moussée qui, ensuite, est adjointe à la pièce en matière plastique moulée, puis moussée dans cet état de liaison.

2. Procédé selon la revendication 1,
caractérisé en ce que
le moussage se fait à l'intérieur du mouie contre la paroi duquel la face extérieure du matériau décoratif vient porter quand la couche de dos se trouve à l'état moussé.

3. Procédé selon les revendications 1 et 2,
caractérisé en ce que
la pièce en matière plastique moulée est un préformé en matière plastique obtenu par moulage par injection.

4. Procédé selon les revendications 1 et 2,
caractérisé en ce que
la pièce en matière plastique moulée est un préformé en matière plastique obtenu par soufflage.

5. Procédé selon les revendications 1 et 2,
caractérisé en ce que
la pièce en matière plastique moulée est un préformé en matière plastique obtenu par emboutissage.

6. Procédé selon l'une ou plusieurs des revendications 1 à 5,
caractérisé en ce que
la pièce en matière plastique moulée est un préformé en matière plastique obtenu par moulage par compression.

7. Procédé selon l'une ou plusieurs des revendications 1 à 6,
caractérisé en ce que
la pièce en matière plastique moulée est formée à l'intérieur du moule.

8. Procédé selon l'une ou plusieurs des revendications 1 à 7
caractérisé en ce que
la chaleur nécessaire au moussage de la couche de dos provient de la chaleur détenuee par la pièce en matière plastique moulée.

9. Procédé selon l'une ou plusieurs des revendications 1 à 7,
caractérisé en ce que
le moussage de la couche de dos tout d'abord non moussée se fait par apport de chaleur supplémentaire après la formation de la pièce en matière plastique moulée.

10. Procédé selon l'une ou plusieurs des revendications 1 à 9,
caractérisé en ce que
la cavité de l'outil est agrandie après le moulage du préformé en matière plastique pour former les zones de moussage.

11. Procédé selon la revendication 10,
caractérisé en ce que
la cavité est agrandie seulement partiellement sur des zones du moule.

12. Procédé selon la revendication 10 ou 11,
caractérisé en ce que
la cavité est agrandie différemment dans le moule à injection.

13. Procédé selon l'une ou plusieurs des revendications 1 à 12,
caractérisé en ce que
le moussage de la couche de dos est exécuté dans un moule séparé.

14. Procédé selon l'une ou plusieurs des revendications 1 à 13,
caractérisé en ce que
la couche de dos est moussée à une température supérieure à 100° C.

15. Procédé selon l'une ou plusieurs des revendications 1 à 14,
caractérisé en ce que
la couche de dos tout d'abord non moussée est préchauffée avant l'opération de moussage.

16. Procédé selon la revendication 15,
caractérisé en ce que
le préchauffage a lieu en dehors de la cavité du moule.

17. Procédé selon la revendication 15,
caractérisé en ce que
le préchauffage a lieu à l'intérieur de la cavité du moule.
